(19)

Europäisches Patentamt

European Patent Office

Office européen des brevets

(11) **EP 1 421 568 B1**

(12) **EUROPÄISCHE PATENTSCHRIFT**

(45) Veröffentlichungstag und Bekanntmachung des Hinweises auf die Patenterteilung:
**18.11.2009 Patentblatt 2009/47**

(21) Anmeldenummer: **02764811.2**

(22) Anmeldetag: **30.07.2002**

(51) Int Cl.:
**G08G 1/16** [(2006.01)]

(86) Internationale Anmeldenummer:
**PCT/EP2002/008480**

(87) Internationale Veröffentlichungsnummer:
**WO 2003/015053 (20.02.2003 Gazette 2003/08)**

(54) **VERFAHREN ZUR BESTIMMUNG EINER MODELLFAHRBAHN**

METHOD FOR DETERMINING A MODEL TRAVEL PATH

PROCEDE POUR DETERMINER UNE VOIE DE CIRCULATION MODELE

(84) Benannte Vertragsstaaten:
**AT BE BG CH CY CZ DE DK EE ES FI FR GB GR IE IT LI LU MC NL PT SE SK TR**

(30) Priorität: **07.08.2001 DE 10138641**

(43) Veröffentlichungstag der Anmeldung:
**26.05.2004 Patentblatt 2004/22**

(73) Patentinhaber: **IBEO Automobile Sensor GmbH 22179 Hamburg (DE)**

(72) Erfinder:
• **LAGES, Ulrich**
  **21031 Hamburg (DE)**
• **SPARBERT, Jan**
  **89160 Dornstadt (DE)**

(74) Vertreter: **Manitz, Finsterwald & Partner GbR Martin-Greif-Strasse 1 80336 München (DE)**

(56) Entgegenhaltungen:
**EP-A- 1 074 960     WO-A-97/42521 US-A- 5 818 355**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Bestimmung einer Modellfahrbahn auf der Basis von Koordinaten von Objektpunkten von eine Fahrbahn zumindest näherungsweise wiedergebenden, insbesondere die Fahrbahn begrenzenden Objekten, die mittels zumindest eines optoelektronischen Sensors, insbesondere eines Laserscanners erhalten wurden.

Für die Steuerung von Fahrzeugen auf einer Fahrbahn ist es wünschenswert, die Lage und den Verlauf der Fahrbahn maschinell erfassen zu können, um auf der Basis dieser Informationen Steuer- oder Überwachungsfunktionen ausführen zu können. Insbesondere soll das Fahrzeug in der Regel auf der Fahrbahn gehalten werden. Eine Erkennung der Fahrbahn kann dabei anhand von die Fahrbahn zumindest näherungsweise wiedergebenden, insbesondere die Fahrbahn begrenzenden Objekten wie zum Beispiel Leitpfosten erfolgen. Die Lage solcher Objekte kann mittels eines entsprechenden an dem Fahrzeug befestigten optoelektronischen Sensors, insbesondere eines Laserscanners, festgestellt werden, wenn die Objekte im Sichtbereich des Sensors von diesem erfaßt wurden.

Der optoelektronische Sensor erfaßt dabei je nach Größe und Entfernung der Objekte sowie Auflösungsvermögen des Sensors Objektpunkte solcher die Fahrbahn bestimmenden Objekte und gibt deren Koordinaten zur Weiterverarbeitung aus. Aus diesen Daten kann dann prinzipiell in einem Fahrbahnmodell eine der tatsächlichen Fahrbahn entsprechende Modellfahrbahn bestimmt werden, die Ausgangspunkt für weitere Verfahren sein kann.

Dazu muß die Modellfahrbahn während der Fahrt des Fahrzeugs und damit sehr schnell bestimmbar sein. Darüber hinaus sollte das Fahrbahnmodell die tatsächliche Fahrbahn zuverlässig wiedergeben.

WO 97/42521 A1 beschreibt ein Verfahren mit den Merkmalen des Oberbegriffes des Anspruchs 1.

Es ist Aufgabe der vorliegenden Erfindung, ein Verfahren zur Bestimmung einer Modellfahrbahn auf der Basis von Koordinaten von Objektpunkten von eine Fahrbahn zumindest näherungsweise wiedergebenden, insbesondere die Fahrbahn begrenzenden Objekten, die mittels zumindest eines optoelektronischen Sensors, insbesondere eines Laserscanners, erhalten wurden, bereitzustellen, das zuverlässig und schnell arbeitet.

Die Aufgabe wird gelöst durch ein Verfahren mit den Merkmalen des Anspruchs 1.

Das erfindungsgemäße Verfahren geht aus von Daten über die Lage von eine Fahrbahn zumindest näherungsweise wiedergebenden, insbesondere die Fahrbahn begrenzenden Objekten, die sich im Sichtbereich mindestens eines optoelektronischen Sensors, insbesondere eines Laserscanners, befinden und von diesem, in der Regel während eines Abtastdurchlaufs, erfaßt wurden. Bei diesen Objekten kann es sich grundsätzlich um beliebige Objekte handeln, besonders aber um Leitpfosten oder Bäume oder Sträucher am Rand der Fahrbahn.

Je nach Größe und Lage eines Objekts sowie in Abhängigkeit von dem Auflösungsvermögen des Sensors können die Daten über die Objekte die Koordinaten von einem oder mehreren Objektpunkten enthalten. Die Koordinaten beziehen sich hierbei auf die Lage des Sensors, der die Objektpunkte erfaßt, das heißt, daß die Daten die Berechnung der relativen Lage zwischen Sensor und Objektpunkt erlauben.

Die Koordinaten können dabei grundsätzlich in beliebigen Koordinatensystemen angegeben sein, doch sind sie vorzugsweise in einem mit dem Sensor verbundenen Koordinatensystem definiert.

Das erfindungsgemäße Verfahren verwendet diese Koordinaten von Objektpunkten, um eine Modellfahrbahn in einem Fahrbahnmodell zu bestimmen. Bei dieser Modellfahrbahn handelt es sich um eine in der Regel nur näherungsweise Darstellung der realen Fahrbahn in einem Modell, in dem die Punkte der Modellfahrbahn anhand von Modellparametern und entsprechenden, diese Modellparameter enthaltenden mathematischen Beziehungen bestimmbar sind.

In einem ersten Schritt des erfindungsgemäßen Verfahrens wird innerhalb des Sichtbereichs des Sensors ein Nahbereich und ein Fernbereich definiert, so daß zwei Gruppen von Objektpunkten, nämlich eine Gruppe von Objektpunkten im Nahbereich und eine Gruppe von Objektpunkten im Fernbereich, entstehen. Grundsätzlich können sich Nah- und Fernbereich überlappen, so daß unter Umständen ein Objektpunkt sowohl zur Gruppe der Objektpunkte im Nahbereich als auch der Gruppe der Objektpunkt im Fernbereich gehören kann. Jeder der Bereiche kann durch einen entsprechenden unteren und einen oberen Grenzabstand definiert werden, so daß ein Objektpunkt, dessen Abstand von dem Sensor zwischen dem unteren und dem oberen Grenzabstand liegt, der entsprechenden Gruppe von Objektpunkten zugeordnet wird. Unter "Abstand" kann hierbei der geometrische Abstand verstanden werden. Es ist jedoch auch möglich, andere ähnliche Abstandskriterien zu verwenden, wie zum Beispiel den Abstand von dem Sensor in Richtung einer Längsachse des Sensors oder einer anderen vorbestimmten Achse wie einer Tangente an die Modellfahrbahn. Der untere Grenzabstand für den Nahbereich ist dabei immer kleiner oder gleich dem unteren Grenzabstand des Fernbereichs.

In einem zweiten Schritt werden aus den Objektpunktkoordinaten von Objektpunkten im Nahbereich Werte von Lageparametern bestimmt, durch die eine Modellfahrbahnbreite und die Lage mindestens eines Modellfahrbahnrandes relativ zu dem Sensor bestimmt sind. Das heißt, daß die Lageparameter nur so gewählt werden müssen, daß aus ihnen die Modellfahrbahnbreite und die Lage mindestens eines Modellfahrbahnrandes relativ zu dem Sensor berechenbar sind. Durch diese Modellparameter ist damit auch die Lage der Modellfahrbahnränder relativ zu dem Sensor bestimmbar.

In einem dritten Schritt werden dann unter Verwendung der Lageparameter aus den Objektpunktkoordinaten im Fernbereich Werte von Verlaufsparametern für den Verlauf der Modellfahrbahn bei fester Lage relativ zu dem Sensor bestimmt. Unter dem Verlauf der Modellfahrbahn wird insbesondere auch eine mögliche Krümmung verstanden.

Durch die Kombination von Lageparametern, die die Lage der Modellfahrbahn relativ zu dem Sensor bestimmen, und Verlaufsparametern, die den weiteren Verlauf der Modellfahrbahn bei gegebener Lage relativ zu dem Sensor bestimmen, wird so eine vollständige Bestimmung der Modellfahrbahn erreicht.

Die Modellparameter enthalten somit wenigstens die Lage- und die Verlaufsparameter.

Gegenüber einem Verfahren, bei dem alle Parameter einer Modellfahrbahn in einem Schritt bestimmt werden, hat das erfindungsgemäße Verfahren den Vorteil, daß durch die Bestimmung der Lageparameter allein anhand der Objektpunktkoordinaten im Nahbereich, die im allgemeinen genauer sind als die im Fernbereich, die Lage der Modellfahrbahn sicher und einfach bestimmt werden kann. Der Verlauf der Modellfahrbahn dagegen, insbesondere deren Krümmung, ist im Nahbereich allein im allgemeinen nur schwer zu bestimmen, da Modellfahrbahnkrümmungen typischerweise gering sind. Der Verlauf der Modellfahrbahn läßt sich daher einfacher anhand der Objektpunktkoordinaten im Fernbereich bestimmen, wobei die Lage der Modellfahrbahn schon zuverlässig bestimmt ist. Durch diese Aufteilung in zwei Schritte werden die jeweiligen Parameter also nur unter Verwendung derjenigen Objektpunkte bestimmt, die für die Werte dieser Parameter von hoher Signifikanz sind, was insgesamt zu einer zuverlässigen Bestimmung der Modellfahrbahnparameter und damit der Modellfahrbahn führt.

Darüber hinaus wird durch die Trennung in Nahbereich und Fernbereich auch eine schnellere Bestimmung der Modellparameter erreicht, da Rechenoperationen mit nur wenig signifikanten Objektpunkten vermieden werden können.

Weiterbildungen und bevorzugte Ausführungsformen der Erfindung werden in der Beschreibung, den Ansprüchen und den Zeichnungen beschrieben.

Bevorzugt werden die Verfahrensschritte iterativ auf zeitlich aufeinanderfolgende Sätze von Objektpunktkoordinaten von entsprechenden, zeitlich aufeinanderfolgenden Abtastdurchgängen des Sensors angewendet, wobei wenigstens ein bei einer Iteration bestimmter Parameterwert in einem späteren Schritt oder einer späteren Iteration bei der Bestimmung wenigstens eines Parameterwertes verwendet wird. Da sich die Umgebung eines Fahrzeugs in der Regel nicht sehr schnell ändert, können dadurch Ergebnisse aus vorhergehenden Iterationen zur Bestimmung der Parameterwerte bei späteren Schritten oder Iterationen sehr vorteilhaft verwendet werden, da sie sich nur wenig ändern.

Besonders bevorzugt wird für mindestens einen Parameter bei jeder Iteration zunächst ein vorläufiger Wert bestimmt. Ein endgültiger Wert des Parameters für die aktuelle Iteration wird dann durch Filterung des bei der aktuellen Iteration bestimmten vorläufigen Parameterwertes und bei vorhergehenden Iterationen bestimmter vorläufiger Werte desselben Parameters bestimmt. Hierdurch lassen sich insbesondere Fluktuationen in den Parametern, die z.B. durch eine sich verändernde Dichte von Objekten entlang der Fahrbahn bedingt sein können, reduzieren. Die Zeitkonstante des Filters bzw. die Breite des Filters im Frequenzraum kann dabei für jeden Parameter unterschiedlich sein. Insbesondere kann die Zeitkonstante abhängig von der typischer Änderungsgeschwindigkeit des Parameters bestimmt sein, die unter anderem von der Geschwindigkeit des Sensors bzw. eines diesen tragenden Fahrzeugs abhängig sein kann. Bei der Durchführung des Verfahrens kann hierzu eine über entsprechende Geschwindigkeitssensoren des Fahrzeugs einzulesende Fahrzeuggeschwindigkeit benutzt werden.

Ganz besonders bevorzugt kann die Filterung durch Bildung gleitender Mittelwerte erfolgen, wobei für jeden Parameter jeweils andere Zeitkonstanten, d.h. Zeitintervalle, über die gemittelt wird, vorgesehen sein können. Sehr vorteilhaft können einzelne Werte bei dieser Mittelung auch unterschiedlich gewichtet werden. Hierbei können z.B. als Kriterien die zeitliche Reihenfolge, beispielsweise eine stärkere Wichtung neuerer Werte, oder auch die vermutliche Genauigkeit der vorläufigen Parameterwerte als Kriterien herangezogen werden. Die Genauigkeit der vorläufigen Parameterwerte kann sich z.B. aus der Anzahl der zur Bestimmung der vorläufigen Parameterwerte verfügbaren Objektpunkte bei einer Iteration ergeben, durch Vorgabe einer maximal erlaubten Änderung des vorläufigen Parameterwertes von einer Iteration zur nächsten oder durch Vorgabe einer maximal erlaubten Abweichung vom letzten gleitenden Mittelwert des Parameters, so daß bei einer als fehlerhaft, weil zu groß eingeschätzten Änderung der entsprechende Wert nur geringer gewichtet wird, was im wesentlichen einer Plausibilitätsprüfung entspricht. Weiterhin kann die Genauigkeit auch davon abhängen, wie nahe zu dem Sensor sich der oder die zur Bestimmung des vorläufigen Parameterwertes in dieser Iteration wesentlichen Objektpunkte befunden haben.

Bei diesen iterativen Verfahren, bei denen Parameterwerte vorhergehender Iterationen verwendet werden, können jeweils für die ersten Iterationen statt der nicht bestimmten früheren Parameterwerte geschätzte Werte verwendet werden. Bei der Filterung ist es grundsätzlich auch möglich, mit der Filterung erst zu beginnen, wenn genügend frühere Parameterwerte vorhanden sind.

Bevorzugt werden als Lageparameter die Abstände des linken und rechten Modellfahrbahnrandes von dem Sensor verwendet. Hierbei kann der Abstand auf einer Senkrechten zu einer Tangente auf den Modellfahrbahnrand, die durch den Sensor verläuft, bestimmt sein. Diese Lageparameter sind besonders einfach zu bestimmen, da sie sich unmittelbar aus der Lage der Objektpunkte im Nahbereich ergeben.

Besonders bevorzugt werden jedoch als Lageparameter eine Modellfahrbahnbreite und ein Abstand des Sensors von mindestens einem der Modellfahrbahnränder oder der Modellfahrbahnmitte verwendet. Für diese Lageparameter ergeben sich geringere zeitliche Schwankungen, da sich die Modellfahrbahnbreite entsprechend der tatsächlichen Fahrbahnbreite nur langsam verändern sollte, während sich der Abstand des Sensors von einem der Modellfahrbahnränder oder der Modellfahrbahnmitte schneller verändern kann. Entsprechend der unterschiedlichen Änderungsgeschwindigkeiten können insbesondere Filter mit unterschiedlichen Zeitkonstanten gewählt werden. Damit ergibt sich eine besonders zuverlässige Bestimmung der Modellfahrbahnbreite.

Bevorzugt kann der Verlauf der Modellfahrbahn bei durch die Lageparameter gegebener Lage durch den durch entsprechende Verlaufsparameter bestimmten Verlauf eines linken und eines rechten Modellfahrbahnrandes dargestellt werden. Dies ermöglicht eine Darstellung auch komplizierterer Fahrbahnverläufe, da der linke und der rechte Modellfahrbahnrand getrennt parametrisiert sind.

Besonders bevorzugt wird der Modellfahrbahnverlauf jedoch durch eine Führungskurve beschrieben, wobei die Lagen des linken und des rechten Modellfahrbahnrandes aus der Führungskurve unter Verwendung der Lageparameter bestimmt werden. Dabei ist die Lage der Führungskurve zumindest implizit durch die Lageparameter bestimmt und ihr Verlauf durch entsprechende Verlaufsparameter. Bei dieser Führungskurve kann es sich z.B. um einen der Modellfahrbahnränder handeln, ganz besonders bevorzugt wird jedoch die Modellfahrbahnmitte als Führungskurve verwendet, da sich diese aus Symmetriegründen besonders sicher und einfach bestimmen läßt. Bei beiden Alternativen werden die Modellfahrbahnränder durch Translation der Führungskurve entsprechend der Lageparameter erhalten. Durch Verwendung einer Führungskurve wird die Anzahl der in dem Modell zu bestimmenden Verlaufsparameter gegenüber einem entsprechenden Modell mit zwei getrennt parametrisierten Modellfahrbahnrändern halbiert, wodurch das Verfahren schneller durchgeführt werden kann. Bezieht man die Anzahl der zur Verfügung stehenden Objektpunktkoordinaten auf die Anzahl der Verlaufsparameter, stehen darüber hinaus zur Bestimmung eines Verlaufsparameters relativ mehr Objektpunktkoordinaten zur Verfügung, was zu einer geringeren Unsicherheit bei der Bestimmung führt.

Obwohl die Modellfahrbahn durch geeignete, aber sonst beliebige, parametrisierte mathematische Beziehungen, z.B. ein Kreis-Gerade-Modell, dargestellt werden kann, wird für eine besonders einfache und schnelle Durchführung des Verfahrens die Modellfahrbahn, d.h. z.B. die Modellfahrbahnränder oder die Führungskurve, durch ein Polynommodell und zugehörige Parametersätze dargestellt. Besonders bevorzugt werden dabei Polynome zweiten Grades verwendet, die zum einen eine besonders schnelle Durchführung des Verfahrens erlauben. Zum anderen sind bedingt durch die begrenzte Sichtweite eines optoelektronischen Sensors selbst unter idealen Bedingungen in der Regel nur einfache gekrümmte Fahrbahnverläufe erfaßbar, die hinreichend genau durch ein Polynom zweiten Grades angenähert werden können.

Wird das Verfahren iterativ durchgeführt, so können bei einer ersten Iteration zunächst die eine Krümmung beschreibenden Koeffizienten in dem Polynom auf den Wert Null gesetzt werden, was einer geraden Fahrbahn entspricht.

Die unteren und oberen Grenzabstände zur Definition von Nah- und Fernbereich können grundsätzlich fest gewählt werden. Bevorzugt werden sie jedoch bei iterativer Durchführung des Verfahrens im Verlauf des Verfahrens entsprechend der Anzahl und/oder Lage der Objektpunkte sowie gegebenenfalls des Modellfahrbahnverlaufs verändert, wobei die Grenzabstände besonders bevorzugt zwischen einer jeweiligen festen unteren und oberen Schranke angepaßt werden können. Hierdurch wird die Genauigkeit der Bestimmung erhöht, da die Auswahl der Punkte entsprechend ihrer Signifikanz den Gegebenheiten der Fahrbahn bzw. der erfaßten Objekte angepaßt werden kann.

Der untere Grenzabstand des Nahbereichs kann bevorzugt zu Null gewählt werden, so daß der Nahbereich unmittelbar vor dem Sensor beginnt. Der untere Grenzabstand des Fernbereichs kann beispielsweise als die untere Schranke des oberen Grenzabstands des Nahbereichs oder auch zu Null gewählt werden. Der obere Grenzabstand des Nahbereichs kann beispielsweise im Bereich zwischen einer unteren Schranke von 7 m und einer oberen Schranke von 30 m liegen, der des Fernbereichs zwischen einer unteren Schranke von 7 m und einer oberen Schranke von 80 m bzw. der Sichtweite des Sensors.

Bevorzugt werden die Grenzabstände jeweils in Abhängigkeit von der Anzahl der in jeweiligen Bereich gelegenen Objektpunkte bestimmt, so daß für die Bestimmung der Lage- und Verlaufsparameter hinreichend viele Objektpunkte zur Verfügung stehen.

Besonders bevorzugt kann die Größe des Nah- und/oder des Fernbereichs in Abhängigkeit von mindestens einem der Verlaufsparameter bestimmt werden, was insbesondere durch Anpassung der oberen Grenzabstände erfolgen kann. Hierdurch kann berücksichtigt werden, daß sich insbesondere in engen Kurven aus Sicht des Sensors Objekte auf gegenüberliegenden Fahrbahnseiten überdecken können oder als auf einer Fahrbahnseite liegend erscheinen können.

Bei einer Weiterbildung des Verfahrens kann zusätzlich oder alternativ die Größe des bei dem Verfahren berücksichtigten Sichtbereichs des Sensors in Abhängigkeit von mindestens einem der Verlaufsparameter bestimmt werden, was wegen des oben geschilderten Einflusses der Krümmung der Fahrbahn in der Regel eine Verkleinerung des verwendeten Sichtbereichs in Abhängigkeit von dem Verlaufsparameter bedeutet.

Bevorzugt kann der Modellfahrbahn ein Straßentyp zugeordnet sein. Die Größe des Nah- bzw. Fernbereichs kann dann in Abhängigkeit von dem Straßentyp bestimmt werden. Hierdurch wird berücksichtigt, daß bestimmte Typen von Straßen, wie z.B. Landstraßen oder Autobahnen, zum einen eine bestimmte Mindestdichte von sie begrenzenden Objekten, wie z.B. Leitpfosten, und zum anderen maximal mögliche Krümmungen und damit Fahrbahnverläufe aufweisen. Der Straßentyp kann dementsprechend unter Verwendung von wenigstens einem der Modellfahrbahnparameter, insbesondere der Modellfahrbahnbreite bestimmt werden, wobei ausgenutzt wird, daß im Straßenbau solche, oben genannten Beziehungen zwischen Straßenbreite und Straßentyp durch entsprechende Vorschriften bestehen. Insbesondere ist dies bei Straßentypen wie Autobahn, Landstraße oder innerörtliche Straße möglich. Alternativ oder ergänzend kann jedoch auch die Position des Sensors und eine digitale Karte verwendet werden, um zu bestimmen, von welchem Typ die Fahrbahn ist, auf der sich der Sensor gerade befindet. Die Position des Sensors kann dabei durch entsprechende Navigationssysteme oder auch durch GPS (Global Positioning System) bestimmt werden. Anhand der Position kann dann mittels der digitalen Karte festgestellt werden, auf welcher Straße sich der Sensor bzw. das ihn tragende Fahrzeug befindet.

Zur Festlegung der Größe können auch mehrere, insbesondere die genannten Kriterien gleichzeitig berücksichtigt werden.

Bevorzugt werden die Lageparameter unter Verwendung der Lage der Objektpunkte im Nahbereich relativ zu einem der geschätzten Modellfahrbahnränder, einer geschätzten Führungskurve oder einer aus einer dieser Kurven durch Translation hervorgehenden Kurve bestimmt, wobei die geschätzte Modellfahrbahn durch die in dem letzten Iterationsschritt bestimmten Parameterwerte bestimmt ist und bei einer ersten Durchführung der Bestimmung der geschätzte Verlauf aus anderen Angaben geschätzt wird. Hierbei werden insbesondere Effekte der Fahrbahnkrümmung mitberücksichtigt, was die Genauigkeit der Lageparameterwerte erhöht.

Besonders bevorzugt wird zur Bestimmung der Lageparameter, insbesondere wegen der schnellen Berechenbarkeit, eine Achse vorbestimmt und für jeden Objektpunkt im Nahbereich dessen Abstand von einem der geschätzten Modellfahrbahnränder, der geschätzten Führungskurve oder einer aus einer dieser Kurven durch Translation hervorgehenden Kurve in einer Richtung parallel zu einer vorbestimmten Achse bestimmt.

Bei einer noch einfacheren Vorgehensweise können bevorzugt die Objektpunktee im Nahbereich auf eine vorbestimmte Achse projiziert und die Lageparameter auf der Basis der Abstände dieser projizierten Objektpunkte von einem Referenzpunkt auf der Achse bestimmt werden. Hierdurch ergibt sich ein besonders einfaches Verfahren zur Bestimmung der Lageparameter, insbesondere der Abstände des Sensors von den Modellfahrbahnrändern oder der Modellfahrbahnbreite und des relativen Abstandes des Sensors von einem der Modellfahrbahnränder oder der Modellfahrbahnmitte.

Besonders bevorzugt wird als Achse bei einer der geschilderten Varianten eine Senkrechte auf eine Längsachse des Sensors verwendet. Bei dieser Längsachse kann es sich insbesondere um die Längsachse eines Fahrzeugs handeln, an dem der Sensor gehalten ist. Ganz besonders bevorzugt kann zur Berücksichtigung einer Schrägfahrt eines Fahrzeugs auf einer Fahrbahn, z.B. bei Ein- und Ausfahrten, als Achse eine Senkrechte auf eine Längsachse des Sensors korrigiert um einen Gierwinkel des Sensors verwendet werden. Unter dem Gierwinkel des Sensors wird hierbei der Gierwinkel eines Fahrzeugs verstanden, an dem der Sensor befestigt ist. Dieser Gierwinkel kann aus entsprechenden Fahrzeugdaten bestimmt werden, wobei angenommen wird, daß das Fahrzeug zu Anfang in einem vorgegebenen Winkel, insbesondere parallel, zum Fahrbahnrand gestanden hat. Es ist jedoch auch grundsätzlich möglich, den Gierwinkel in nachfolgenden Verarbeitungsschritten aus der Verfolgung der Bewegung des Sensors relativ zu der Modellfahrbahn zu bestimmen.

Bevorzugt kann als Achse auch eine Senkrechte auf eine Tangente an eine geschätzte Modellfahrbahn im Nahbereich verwendet werden, wobei die geschätzte Modellfahrbahn durch die in dem letzten Iterationsschritt bestimmten Parameterwerte bestimmt ist und bei einer ersten Durchführung der Bestimmung der geschätzte Verlauf aus anderen Angaben geschätzt wird. Dies entspricht im wesentlichen der geometrischen Definition einer Modellfahrbahnbreite. Bei dieser Art der Bestimmung ergeben sich daher selbst bei sehr großen Winkeln zwischen der Längsachse des Sensors bzw. des Fahrzeugs und den Modellfahrbahnrändern allenfalls kleine Fehler bei der Lageparameterbestimmung. Bei einer ersten Iteration kann dabei als Modellfahrbahnverlauf eine Gerade verwendet werden.

Bevorzugt wird bei den oben genannten Varianten des Verfahrens, bei denen eine Projektion durchgeführt wird, als Referenzpunkt die Lage des Sensors oder der Schnittpunkt der Führungskurve oder der Modellfahrbahnmitte mit der Achse verwendet. Dabei ergeben sich die Führungskurve oder die Modellfahrbahnmitte jeweils aus den in der letzten Iteration bestimmten Parameterwerten. Weiterhin ist bei Verwendung des Schnittpunkts der Führungskurve oder der Modellfahrbahnmitte mit der Achse vorzugsweise der Abstand zwischen der Achse und der Lage des Sensors möglichst gering. Hierdurch lassen sich die Werte der Lageparameter ohne große Umrechnung leicht bestimmen.

Für eine besonders einfache und schnelle Durchführung des Verfahrens wird vor der Bestimmung der Lageparameter zunächst durch Lage und Verlauf der Modellfahrbahnmitte in der vorhergehenden Iteration eine Linie definiert. Bei der Bestimmung der Werte der Lageparameter werden dann die Objektpunkte im Nahbereich auf der einen Seite der Linie als die Fahrbahn auf dieser Seite begrenzende Objektpunkte und die Objektpunkte im Nahbereich auf der anderen Seite der Linie als die Fahrbahn auf dieser anderen Seite begrenzende Objektpunkte verwendet. Hierdurch wird eine sehr einfache Trennung der Objektpunkte im Nahbereich in eine linke und eine rechte Gruppe erreicht, die eine einfache Abstandsbestimmung zuläßt, während ohne diese Trennung eine spätere Aufteilung der projizierten Objektpunkte in eine linke und eine rechte Gruppe notwendig wäre und zu erheblichem Aufwand führte. Besonders einfach gestaltet sich das Verfahren, wenn als Führungskurve die Modellfahrbahnmitte benutzt wird.

Zur Bestimmung der Verlaufsparameter für den Verlauf der Modellfahrbahn aus den Objektpunkten im Fernbereich werden im dritten Schritt bevorzugt mindestens zwei Sätze von Werten für Verlaufsparameter vorgegeben. Daraufhin wird als den Verlauf der Modellfahrbahnränder beschreibender Satz von Werten der Satz gewählt, der eine Modellfahrbahn definiert, auf der die minimale Anzahl von Objektpunkten im Fernbereich liegt. Bei diesem Verfahren wird also durch die Sätze von Werten für die Verlaufsparameter eine Kurvenschar für mögliche Verläufe der Modellfahrbahn bei bereits durch die Lageparameter festgelegter Lage der Modellfahrbahn vorgegeben und aus diesen Verläufen durch eine einfache Prüfung, ob ein Objektpunkt auf der möglichen Modellfahrbahn liegt oder nicht, der günstigste Modellfahrbahnverlauf ausgewählt. Hierdurch ergibt sich ein besonders einfaches Verfahren, bei dem sehr zuverlässig eine Modellfahrbahn erhalten wird, auf der idealerweise keine Objektpunkte mehr liegen. Bei Verwendung von anderen Anpassungsverfahren wie z.B. einer Anpassung der Parameter mit Hilfe der Methode der kleinsten Quadrate zumindest in seiner einfachen Form ist es dagegen möglich, daß eine Reihe von Objektpunkten auf der bestimmten Modellfahrbahn verbleibt, so daß die Modellfahrbahn eine weniger gute Näherung der realen Fahrbahn darstellt, da bei Verfolgung der Modellfahrbahn eine Kollision mit Objekten auf der realen Fahrbahn zu befürchten ist.

Bevorzugt enthalten die Sätze von Werten für die Verlaufsparameter bei der aktuellen Iteration den Satz von Werten für die Verlaufsparameter bei einer vorhergehenden Iteration und mindestens einen weiteren Satz von Parameterwerten, der durch Variation der Verlaufsparameterwerte des Satzes bei der vorhergehenden Iteration erhalten wird. Dieses Verfahren trägt der Tatsache Rechnung, daß sich in der Realität Krümmungen von Fahrbahnen nur langsam ändern, so daß auf einfache Weise mit nur wenigen Sätzen von Werten für die Verlaufsparameter die Änderung des realen Fahrbahnverlaufs in dem Fahrbahnmodell gut erfaßt werden kann.

Besonders bevorzugt kann hierbei der Modellfahrbahn wie bei der Bestimmung der Größe des Nah- bzw. Fernbereichs ein Straßentyp zugeordnet werden und die Anzahl der Sätze der variierten Parameterwerte und/oder die Variation in Abhängigkeit von dem Straßentyp bestimmt werden. Hierbei wird, wie oben schon bemerkt, ausgenutzt, daß verschiedene Straßentypen typischerweise unterschiedliche maximale Krümmunggen und auch Krümmungsänderungen aufweisen. Dies gilt insbesondere im Hinblick auf den Unterschied zwischen Autobahnen, Landstraßen und innerörtlichen Straßen. Hierdurch kann eine besonders schnelle, aber zuverlässige und genaue Bestimmung der Krümmung erfolgen, da der Aufwand situationsgerecht verändert wird. Insbesondere ist bei einer Fahrt auf einer Autobahn, die typischerweise mit hoher Geschwindigkeit erfolgt und daher eine besonders schnelle Durchführung des Verfahrens erfordert, nur eine vergleichsweise kleine Schar von Kurven notwendig, so daß auch für hohe Geschwindigkeiten eine hinreichend rasche Durchführung des Verfahrens möglich ist.

Weiterhin können bevorzugt Werte für einen separat zu bestimmenden Parameter der Modellfahrbahn, insbesondere den relativen Gierwinkel zwischen einer Längsachse des Sensors und einer Tangente an die Modellfahrbahn im Nahbereich, von einer externen Datenquelle eingelesen werden. Hierdurch läßt sich besonders flexibel die Genauigkeit des Fahrbahnmodells erhöhen, indem auch Parameter verwendet werden, deren Werte über den optoelektronischen Sensor nur schwer oder ungenau zu bestimmen sind. Insbesondere bei der Bestimmung des relativen Gierwinkels zwischen einer Längsachse des Sensors und einer Tangente an die Modellfahrbahn im Nahbereich kann der Gierwinkel eines Fahrzeugs, an dem der Sensor gehalten ist, bestimmt und als genäherter Wert für den relativen Gierwinkel als Modellparameter benutzt werden.

Bestimmte auf einer Fahrbahn vorhandene Objekte, wie zum Beispiel vorausfahrende Fahrzeuge, begrenzen die Fahrbahn nicht und würden, wenn sie zur Bestimmung der Modellfahrbahn verwendet würden, zu sehr ungenauen oder gar unbrauchbaren Ergebnissen führen. Bevorzugt wird bei dem erfindungsgemäßen Verfahren daher vor dem ersten Schritt eine Objekterkennung, -klassifizierung und -verfolgung durchgeführt. Objektpunkte von Objekten vorgegebener Objektklassen werden bei dem folgenden ersten, zweiten und dritten Schritt nicht berücksichtigt. Hierdurch kann sichergestellt werden, daß bestimmte Objekte, die eindeutig nicht die Fahrbahn begrenzen, die Bestimmung der Modellfahrbahn nicht behindern. Hierbei kann es sich insbesondere um sich bewegende Objekte auf der Modellfahrbahn, insbesondere Objekte der Klassen Personenkraftwagen, Lastkraftwagen, Zweirad oder Personen handeln.

Weiterer Gegenstand der Erfindung ist ein Computerprogramm mit Programmcode-Mitteln, um das erfindungsgemäße Verfahren durchzuführen, wenn das Programm auf einem Computer ausgeführt wird.

Weiterhin ist Gegenstand der Erfindung ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird.

Schließlich ist Gegenstand der Erfindung eine Vorrichtung zur Bestimmung einer Modellfahrbahn mit mindestens einem zur Erfassung der Lage von Objekten ausgebildeten optoelektronischen Sensor, insbesondere einem Laserscanner, und einer mit dem optoelektronischen Sensor über eine Datenverbindung verbundenen Datenverarbeitungseinrichtung, die zur Durchführung des erfindungsgemäßen Verfahrens ausgebildet ist.

Eine bevorzugte Ausführungsform der Erfindung wird nun anhand der Zeichnungen beispielhaft erläutert. Es zeigen:

Fig. 1    eine schematische Darstellung einer Modellfahrbahn mit erkannten Objektpunkten zur Erläuterung der Bestimmung der Lageparameter,

Fig. 2    die Modellfahrbahn in Fig. 1 zur Erläuterung der Ermittlung des Modellfahrbahnverlaufs, und

Fig. 3    ein Ablaufdiagramm zur Veranschaulichung eines Verfahrens nach einer bevorzugten Ausführungsform der Erfindung.

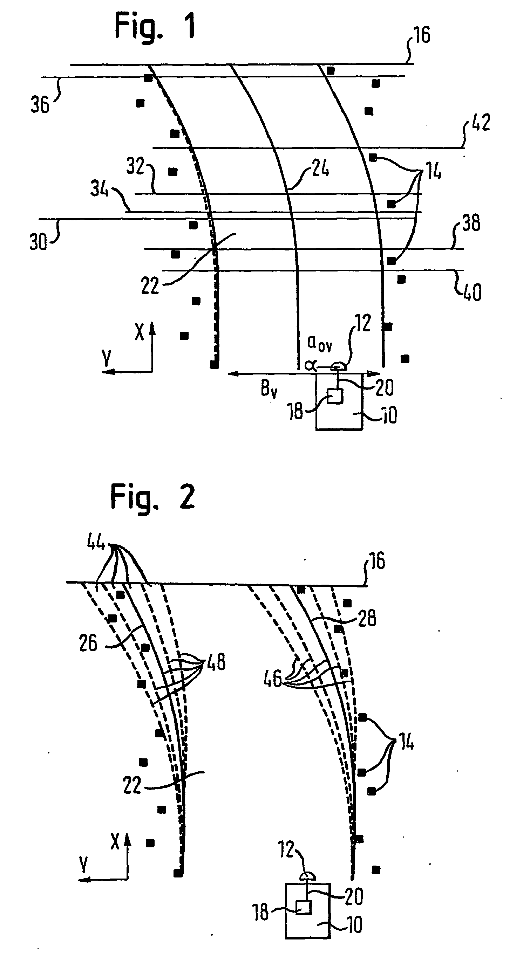

In Fig. 1 sind in einem kartesischen Koordinatensystem schematisch ein Fahrzeug 10 mit einem daran befestigten Laserscanner 12 sowie von dem Laserscanner 12 erfaßte Objektpunkte 14, die den Verlauf einer in der Figur nicht gezeigten tatsächlichen Fahrbahn näherungsweise begrenzen, dargestellt.

Der Laserscanner 12 ist an dem Fahrzeug 10 montiert und weist einen Sichtbereich auf, dessen Tiefe in den Fig. 1 und 2 durch die Linie 16 angedeutet ist und der einen Winkelbereich von +/-90˚ um die X-Achse erfaßt. Diese bildet daher eine Längsachse des Sensors, die mit der Längsachse des Fahrzeugs 10 übereinstimmt. Der Ursprung des Koordinatensystems liegt im Sensor 12, so daß es sich bei dem Koordinatensystem um ein mit dem Fahrzeug bewegtes Koordinatensystem handelt. Der Übersichtlichkeit halber sind jedoch die Achsen des Koordinatensystems in Richtung der Y-Achse verschoben gezeichnet.

Der Laserscanner 12 tastet in regelmäßigen Abständen seinen Sichtbereich ab und gibt die Objektpunktkoordinaten bei einem Abstastdurchgang erfaßter Objektpunkte 14 sowie, nach Durchführung einer Objekterkennung, -klassifizierung und -verfolgung, Objektdaten an eine Datenverarbeitungseinrichtung 18, die über eine Datenverbindung 20 mit dem Laserscanner 12 verbunden ist, aus. In dem in den Fig. 1 und 2 gezeigten Beispiel entspricht jeweils einem Objektpunkt 14 auch ein Objekt.

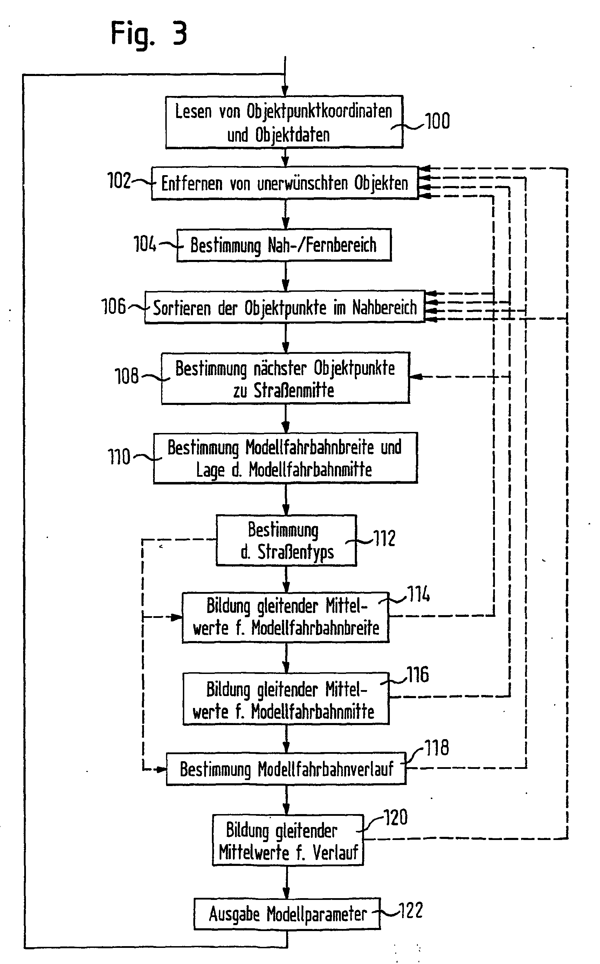

In der Datenverarbeitungseinrichtung 18, die über einen Prozessor und einen damit verbundenen Speicher sowie eine Schnittstelle für die Datenverbindung 20 verfügt, wird mittels eines Computerprogramms das in Fig. 3 dargestellte Verfahren durchgeführt. In Fig. 3 ist grob schematisch ein Flußdiagramm des Verfahrens dargestellt. Abweichend von der üblichen Darstellung in Flußdiagrammen ist jedoch jeweils durch gestrichelte Pfeile dargestellt, welche in einer Iteration ermittelten endgültigen Modellparameter in anderen Verfahrensschritten verwendet werden. Hierbei handelt es sich aber nur um die wichtigsten Beziehungen, ausschlaggebend ist die folgende Beschreibung.

Das Verfahren wird iterativ für zeitlich aufeinanderfolgende Sätze von Objektdaten durchgeführt.

Die Modellfahrbahn 22 wird durch eine Führungskurve 24 (vgl. Fig. 2) und die Breite der Modellfahrbahn definiert. Die Führungskurve ist dabei die Mitte der Modellfahrbahn und ergibt sich für positive X-Werte aus der Beziehung

$$ Y = a_0 + a_2 \bullet X^2 \, , $$

also aus einem Polynom zweiten Grades. Bei einer alternativen Ausführungsform könnte das Polynom zur Berücksichtigung eines Gierwinkels noch einen linearer Term $a_1 \bullet X$ enthalten. Der Lageparameter $a_0$ ist hierbei der Abstand der Modellfahrbahnmitte von dem Sensor, der die Koordinaten X=0 und Y=0 hat. Der Koeffizient $a_2$ des quadratischen Terms beschreibt die Krümmung der Führungskurve und ist daher der Verlaufsparameter in dem Modell.

Die Modellfahrbahnränder 26 und 28 (in Fig. 2 als durchgezogene Linie dargestellt) ergeben sich durch Verschiebung der Führungskurve in bzw. entgegen der Y-Achse um die halbe Modellfahrbahnbreite, die den zweiten Lageparameter des Modells darstellt.

Die von dem Laserscanner 12 ausgegebenen Objektpunktkoordinaten und Objektdaten werden in Schritt 100 zunächst eingelesen.

In Schritt 102, der bei der ersten Iteration übersprungen wird, werden unerwünschte Objekte von einer in der letzten Iteration bestimmten Modellfahrbahn entfernt. Ob ein Objekt unerwünscht ist oder nicht, leitet sich aus der Klassifizierung des Objekts ab, wobei als Objektklassen Personen, Zweiräder, Personenkraftwagen, Lastkraftwagen und nichtklassifizierte Objekte vorgesehen sind. Objektpunktkoordinaten von bewegten Objekten der Objektklassen Person, Zweirad, Personenkraftwagen oder Lastkraftwagen werden aus der Menge der Objektpunktkoordinaten entfernt, wenn sie sich auf der Modellfahrbahn, die durch die Parameterwerte der letzten Iteration bestimmt ist, befinden. Durch die Entfernung dieser die Fahrbahn nicht begrenzenden Objekte bzw. Objektpunkte können die folgenden Verfahrensschritte ohne Beeinträchtigungen durchgeführt werden.

In Schritt 104 wird die Größe des Nah- bzw. Fernbereichs bestimmt.

Der untere Grenzabstand für den Fernbereich, in Fig. 1 angedeutet durch die Linie 30, beträgt im Beispiel 7m. Der obere Grenzabstand $X_c(i)$ für die Iteration i, in Fig. 1 angedeutet durch die Linie 32, kann zwischen einer unteren und oberen Schranke $X_{c,min}$ bzw. $X_{c,max}$ variieren, die zum Beispiel Werte von 10 m bzw. 80 m haben können und in Fig. 1 durch die Geraden 34 und 36 angedeutet sind. Ausgehend von dem Grenzabstand $X_c(i-1)$ für die vorhergehende Iteration wird nun bestimmt, wieviele Objektpunkte im Bereich zwischen $X_c(i-1)$ und $X_{c,max}$ liegen. Dann wird eine Zwischengröße $X_{cv}$ berechnet, die sich aus $X_c(i-1)$ durch Erhöhung um einen Wert von $\Delta X_{incr}$, im Beispiel 0,5m, ergibt, wenn die Anzahl der Punkte einen Mindestwert überschreitet, und die sich aus $X_c(i)$ durch Erniedrigung um einen Wert von $\Delta X_{decr}$, im Beispiel 1m, im anderen Fall ergibt. Darüber hinaus wird der Wert $X_c(i)$ entsprechend der mittleren, im letzten Iterationsschritt bestimmten Krümmung $a_{2m}$ adaptiert, wozu ein Faktor $\exp(-b_c\,|a_{2m}|)$ verwendet wird. Der Faktor $b_c$ ist geeignet zu wählen, beispielsweise 0,1, kann aber durch Versuche weiter optimiert werden. $X_c(i)$ kann dann beispielsweise durch folgende Beziehung gegeben sein:

$$X_c(i) = \begin{cases} X_{c,max} \cdot \exp\left(-b_c\left|a_{2m}\right|\right), & falls \quad X_{cv} > X_{c,max} \cdot \exp\left(-b_c\left|a_{2m}\right|\right) \\ X_{c,min}, & falls \quad X_{cv} < X_{c,min} \\ X_{cv} & sonst \end{cases}$$

Der untere Grenzabstand des Nahbereichs beträgt im Beispiel Null, so daß der Nahbereich unmittelbar hinter dem Sensor beginnt. Der obere Grenzabstand $X_w(i)$ für die Iteration i, in Fig. 1 angedeutet durch die Linie 38, kann zwischen einer unteren und oberen Schranke $X_{w,min}$ bzw. $X_{w,max}$ variieren, die zum Beispiel Werte von 7 m bzw. 30 m haben können und in Fig. 1 durch die Geraden 40 und 42 angedeutet sind. Ausgehend von dem Grenzabstand $X_c(i)$ wird nun $X_w(i)$ bestimmt. Auch hier wird zunächst eine Zwischengröße $X_{wv} = X_c(i)/2$ bestimmt. Die obere Schranke wird mit einem Faktor $\exp(-b_w\,|a_{2m}|)$ adaptiert, um Einflüsse der Fahrbahnkrümmung zu berücksichtigen. $X_w(i)$ ergibt sich dann analog zu $X_c(i)$ unter Verwendung der entsprechenden Größen $X_{wv}$ statt $X_{cv}$, $X_{w,max}$ statt $X_{c,max}$, $X_{w,min}$ statt $X_{c,min}$ und des anderen Exponentialfaktors in der Beziehung zur Bestimmung von $X_c(i)$.

Bei der ersten Iteration, bei der noch keine letzte Führungskurve bestimmt ist, wird die Größe des Nahbereichs auf einen geringen Anfangswert von zum Beispiel 5m gesetzt, bei dem noch hinreichend viele Objektpunkte im Nahbereich zur Bestimmung der Lageparameter vorhanden sind.

In Schritt 106 werden die Objektpunkte im Nahbereich in Objektpunkte auf der linken bzw. der rechten Modellfahrbahnseite sortiert (vgl. Fig. 1). Dazu wird auf der Basis der in der letzten Iteration berechneten endgültigen Modellparameterwerte die Führungskurve 24 der letzten Iteration berechnet, deren Lage und Verlauf Lage und Verlauf der Modellfahrbahnmitte der letzten Iteration wiedergibt. Die Objektpunkte im Nahbereich werden dann in eine Gruppe rechts und eine Gruppe links der Führungskurve 24 liegender Objektpunkte aufgeteilt.

In Schritt 108 werden dann für jede dieser Gruppen die Objektpunkte bestimmt, die der durch die Führungskurve 24 gegebenen Modellfahrbahnmitte der letzten Iteration am nächsten liegen. Dazu werden die Objektpunkte zur Berücksichtigung der Krümmung in Richtung der Y-Achse um $-a_{2m} \cdot X_{k2}$ verschoben, wobei $a_{2m}$ der mittlere Krümmungsparameter der letzten Iteration und $X_k$ die X-Koordinate eines Objektpunkts k ist. Dann werden die verschobenen Objektpunkte auf die Y-Achse projiziert und die Abstände der verschobenen und projizierten Objektpunkte von dem Schnittpunkt zwischen der Führungskurve 24 und der durch den Sensor 12 verlaufenden Y-Achse als Referenzpunkt ausgewertet. Dies entspricht einer Bestimmung des Abstands in Y-Richtung, den die Objektpunkte von der Führungskurve haben. Die jeweils minimalen Abstände ergeben den Abstand der Modellfahrbahnränder von der Führungskurve 24.

In Schritt 110 werden aus diesen Daten durch Addition der Abstände eine vorläufige Modellfahrbahnbreite $B_v$ und durch Auswertung der Y-Koordinaten der projizierten Punkte mit minimalem Abstand die vorläufige Lage $a_{0v}$ der neuen Modellfahrbahnmitte relativ zu dem Sensor 12 als Mittelwert der beiden projizierten Y-Koordinaten bestimmt (vgl. Fig. 1). Aus diesen Größen läßt sich auch durch einfache Umrechnung die Lage mindestens eines Modellfahrbahnrandes relativ zu dem Sensor 12 bestimmen. Diese vorläufigen Lageparameterwerte werden zunächst gespeichert.

In Schritt 112 werden zur Bestimmung des Straßentyps gleitende gewichtete Mittelwerte über die aktuelle und die in den letzten Iterationen ermittelten vorläufigen Modellfahrbahnbreiten gebildet, wobei die Mittelung über einen längeren Zeitraum, z.B. 60 Iterationen, erfolgt. Wurden erst weniger Iterationen durchgeführt, werden entsprechend weniger Werte für die Modellfahrbahnbreite verwendet. Diese gleitenden Mittelwerte werden jedoch nicht als Lageparameter verwendet, obwohl dies in einer anderen Ausführungsform des erfindungsgemäßen Verfahrens prinzipiell möglich wäre.

Die vorläufigen Breitenwerte der einzelnen Iterationen werden dabei nach drei Kriterien gewichtet. Bei der Berechnung der gleitenden Mittelwerte werden diese dadurch berücksichtigt, daß für jedes Kriterium ein Einzelgewichtungsfaktor vorgesehen ist, der für jede bei der Mittelwerbildung berücksichtigte Iteration i einen unterschiedlichen, dem jeweiligen Kriterium entsprechenden Wert hat. Der bei der Mittelwertbildung verwendete Gesamtgewichtsfaktor für die Iteration ergibt sich dabei als Produkt der Einzelgewichtungsfaktoren, wobei die Produkte selbstverständlich noch durch die Summe der Produkte für alle bei der gleitenden Mittelung berücksichtigten Werte als Normierungsfaktor zu dividieren sind.

Nach dem ersten Kriterium wird ein Wert umso stärker gewichtet, je geringer die Abstände $D_{Rxi}$ bzw. $D_{Lxi}$ in Richtung der X-Achse der zur Führungskurve 24 nächsten Objektpunkte rechts bzw. links der X-Achse in der Iteration i, d.h. der zur Bestimmung des vorläufigen Breitenwerts verwendeten Objektpunkte, sind, da Informationen in der Nähe des Sensors im allgemeinen sicherer sind. Bezeichnet $g_{1i}$ den Einzelgewichtungsfaktor für das erste Kriterium für die Iteration i kann beispielsweise $g_{1i}$ durch folgende Formel gegeben sein:

$$g_{1i} = \frac{1}{1 + 0{,}2 * \min(D_{Rxi}; D_{Lxi})}$$

Nach dem zweiten Kriterium wird ein Wert umso stärker gewichtet, je geringer der Betrag der Differenz zwischen den Abständen $D_{Rxi}$ und $D_{Lxi}$ der rechten und linken Objektpunkte von der Y-Achse ist, die zur Bestimmung des vorläufigen Wertes der Breite verwendet wurden. Bezeichnet $g_{2i}$ den Einzelgewichtungsfaktor für das zweite Kriterium für die Iteration i, kann beispielsweise $g_{2i}$ durch folgende Formel gegeben sein:

$$g_{2i} = \frac{1}{1 + 0{,}2 * \left| D_{Rxi} - D_{Lxi} \right|}$$

Der höchste Wert für diesen Einzelgewichtungsfaktor wird beispielsweise bei Toreinfahrten erreicht, bei denen die die Modellfahrbahnbreite bestimmenden Objektpunkte in Richtung der X-Achse gleich weit von dem Sensor entfernt sind.

Nach dem dritten Kriterium wird ein vorläufiger Wert $B_{vi}$ für die Modellfahrbahnbreite für die Iteration i stark gewichtet, wenn der Betrag seiner Abweichung vom letzten gleitenden, gewichteten Mittelwert für die Modellfahrbahnbreite $B_m$ kleiner als ein Schwellwert $\varepsilon_m$ ist. Unterschreitet der vorläufige Wert für die Modellfahrbahnmitte den letzten gleitenden, gewichteten Wert für die Modellfahrbahnbreite um mehr als den Schwellwert, wird der Wert durchschnittlich gewichtet. Bei Überschreiten des letzten gleitenden, gewichteten Wertes für die Modellfahrbahnbreite um mehr als den Schwellwert dagegen wird der vorläufige Wert für die Modellfahrbahnbreite gering gewichtet, um einer Tendenz zur Aufweitung der Modellfahrbahnbreite entgegenzuwirken. Diese Tendenz ergibt sich daraus, daß in Bereichen mit nur wenigen Objekten, die sich gegebenenfalls nicht nahe der Fahrbahn befinden, die aktuelle, vorläufige Modellfahrbahnbreite zu groß bestimmt wird.

Bezeichnet $g_{3i}$ den Einzelgewichtungsfaktor für das dritte Kriterium für die Iteration i kann beispielsweise $g_{3i}$ durch folgende Beziehung gegeben sein:

$$g_{3i} = \begin{cases} 1{,}0, & falls \quad \left| B_{vi} - B_m \right| < \varepsilon_m \\ 0{,}2, & falls \quad B_{vi} - B_m < -\varepsilon_m \\ 0{,}02, & falls \quad B_{vi} - B_m > \varepsilon_m \end{cases}$$

Der bei der Mittelwertbildung verwendete Gesamtgewichtungsfaktor $g_{bi}$ für die Iteration i ergibt sich aus dem Produkt der drei Einzelgewichtungsfaktoren, wobei die Produkte selbstverständlich noch durch die Summe der Produkte für alle bei der gleitenden Mittelung berücksichtigten Werte als Normierungsfaktor zu dividieren sind:

$$g_{Bi} = \frac{g_{1i} * g_{2i} * g_{3i}}{\sum_{j} gj * g_{2j} * gj}$$

Dabei läuft die Summe über alle zur Mittelwertbildung verwendeten Iterationen.

Liegt der gleitende, gewichtete Mittelwert der Modellfahrbahnbreite in einem einem bestimmten Straßentyp zugeordneten Intervall von Breiten, so wird dieser Straßentyp der Modellfahrbahn zugeordnet. Als Typen können zum Beispiel einspurige Straße, zweispurige Straße oder zweispurige Autobahn vorgesehen sein.

In den Schritten 114 und 116 werden dann durch Bildung gleitender, gewichteter Mittelwerte endgültige Werte für die Lageparameter Modellfahrbahnbreite bzw. Lage der Modellfahrbahnmitte berechnet. Hierbei kann z.B. über 30 Iterationen gemittelt werden.

Die Gewichtung der Werte erfolgt bei der Berechnung der endgültigen Modellfahrbahnbreite durch Bildung des gleitenden, gewichteten Mittelwerts der vorläufigen Modellfahrbahnbreite unter entsprechender Verwendung der beiden ersten oben genannten Kriterien sowie eines vierten Kriteriums, nach dem vorläufige Modellfahrbahnbreitenwerte, die außerhalb des Breitenintervalls für den zuletzt bestimmten Straßentyp liegen, gering gewichtet werden. Das vierte Kriterium entspricht einer Plausibilitätsprüfung, bei der unplausible Werte geringer gewichtet werden. Da in Regionen mit nur wenigen Objektpunkten die Modellfahrbahnbreite tendenziell zu groß bestimmt wird, kann durch eine solche Plausibilitätsprüfung das Auftreten von Fehlern durch eine ungleichmäßige Verteilung von Objektpunkten eingeschränkt werden. Hierzu können dem Einzelgewichtungsfaktor $g_{4i}$ für die Iteration i entsprechende Werte ähnlich wie für $g_{3i}$ zugeordnet werden.

Bei der Bestimmung des endgültigen Werts der Lage der Modellfahrbahnmitte, d. h. des Parameters $a_0$, werden wiederum die ersten drei Kriterien wie bei der Bestimmung des endgültigen Werts für die Modellfahrbahnbreite benutzt. Dabei wird davon ausgegangen, daß die vorläufigen Werte für die Lage der Modellfahrbahnmitte, die gering zu gewichtenden vorläufigen Werten für die Modellfahrbahnbreite entsprechen, ebenso unsicher und damit gering zu gewichten sind.

In Schritt 118 wird dann unter Verwendung des zuletzt bestimmten Straßentyps und der endgültigen Lageparameter der Modellfahrbahnverlauf, d. h. der Verlaufsparameter $a_2$, bestimmt. Die Bestimmung des Modellfahrbahnverlaufs ist in Fig.2 veranschaulicht, wobei im Unterschied zu Fig. 1 nun die endgültige Modellfahrbahnbreite und die endgültige Lage der Modellfahrbahnmitte benutzt werden. Ausgehend von der Führungskurve 24 der letzten Iteration (vgl. Fig. 2) wird eine Schar von 2n+1 möglichen Modellfahrbahnen 44 bestimmt, wobei n eine natürliche Zahl, zum Beispiel 10 ist und als Werte der Lageparameter die aktuellen endgültigen Werte der Lageparameter verwendet werden. Der Übersichtlichkeit halber sind in Fig. 2 nur 5 mögliche Modellfahrbahnen 44 dargestellt. Die möglichen Modellfahrbahnen ergeben sich durch Variation des Verlaufsparameters $a_2$ durch Multiplikation mit festen Faktoren, z.B. $1,05^{-n}$,..., $1,05^n$, Berechnung der entsprechenden möglichen Führungskurve und Verschiebung um die halbe aktuelle endgültige Modellfahrbahnbreite in bzw. entgegen der Richtung der Y-Achse zur Bildung möglicher rechter und linker Modellfahrbahnränder 46 und 48. Entsprechend dem Bildungsgesetz dieser Schar von Kurven enthält diese neben der zuletzt bestimmten Modellfahrbahn mögliche aktuelle, stärker oder weniger stark gekrümmte Modellfahrbahnen, wobei mit zunehmender Anzahl von Kurven auch immer größere bzw. kleinere Krümmungen in der Schar enthalten sind. In Abhängigkeit vom Straßentyp wird daher der Wert von n und damit die Anzahl der Kurven in der Schar angepaßt, indem bei einem Straßentyp, bei dem größere Krümmungen erwartet werden, die Anzahl der Kurven in der Schar größer gewählt wird.

Es wird nun überprüft, auf welcher der möglichen Modellfahrbahnen die minimale Anzahl von Objektpunkten im Fernbereich liegt. Der dieser Modellfahrbahn zugrundeliegende Verlaufsparameter $a_2$ wird dann als vorläufiger Verlaufsparameter bestimmt.

In Schritt 120 wird aus diesen vorläufigen Verlaufsparameter und den Verlaufsparametern früherer Iterationen ein gleitender Mittelwert als endgültiger Wert des Verlaufsparameters berechnet. Hierbei kann die Mittlung z.B. über 10 Iterationen erfolgen.

Die so bestimmten endgültigen Werte der Modellparameter werden dann in Schritt 122 ausgegeben und das Verfahren wird mit Schritt 100 fortgesetzt.

**Bezugszeichenliste**

10    Fahrzeug
12    Laserscanner

14 Objektpunkte
16 Grenze des Sichtbereichs
18 Datenverarbeitungseinrichtung
20 Datenverbindung
22 Modellfahrbahn
24 Führungskurve
26 linker Modellfahrbahnrand
28 rechter Modellfahrbahnrand
30 untere Grenze des Fernbereichs
32 obere Grenze des Fernbereichs
34 untere Schranke oberer Grenzabstand Fernbereich
36 obere Schranke oberer Grenzabstand Fernbereich
38 obere Grenze des Nahbereich
40 untere Schranke oberer Grenzabstand Nahbereich
42 obere Schranke oberer Grenzabstand Nahbereich
44 mögliche Modellfahrbahnen
46 mögliche rechte Modellfahrbahnränder
48 mögliche linke Modellfahrbahnränder

$a_{0v}$     vorläufige Lage der Modellfahrbahnmitte
$B_v$     vorläufige Modellfahrbahnbreite

**Patentansprüche**

1. Verfahren zur Bestimmung einer Modellfahrbahn (22) auf der Basis von Koordinaten von Objektpunkten (14) von eine Fahrbahn zumindest näherungsweise wiedergebenden, insbesondere die Fahrbahn begrenzenden Objekten, die mittels zumindest eines optoelektronischen Sensors (12), insbesondere eines Laserscanners, erhalten wurden, bei dem

   in einem ersten Schritt innerhalb des Sichtbereichs des Sensors (12) ein Nahbereich und ein Fernbereich definiert werden, und in einem zweiten Schritt aus den Objektpunktkoordinaten im Nahbereich Werte von Lageparametern bestimmt werden, durch die eine Modellfahrbahnbreite und die Lage mindestens eines Modellfahrbahnrandes (26, 28) relativ zu dem Sensor (12) bestimmt sind,
   **dadurch gekennzeichnet,**
   **dass** in einem dritten Schritt unter Verwendung der Lageparameter aus den Objektpunktkoordinaten im Fernbereich Werte von Verlaufsparametern für den Verlauf der Modellfahrbahn (22) bestimmt werden.

2. Verfahren nach Anspruch 1,
   **dadurch gekennzeichnet,**
   **daß** die Verfahrensschritte iterativ auf zeitlich aufeinanderfolgende Sätze von Objektpunktkoordinaten von entsprechenden, zeitlich aufeinanderfolgenden Abtastdurchgängen des Sensors (12) angewendet werden, und
   **daß** wenigstens ein bei einer Iteration bestimmter Parameterwert in einem späteren Schritt oder einer späteren Iteration bei der Bestimmung wenigstens eines Parameterwertes verwendet wird.

3. Verfahren nach Anspruch 2,
   **dadurch gekennzeichnet,**
   **daß** bei jeder Iteration für mindestens einen Parameter ein vorläufiger Wert bestimmt wird, und
   **daß** durch Filterung des bei der aktuellen Iteration bestimmten vorläufigen Parameterwertes und bei vorhergehenden Iterationen bestimmter vorläufiger Werte desselben Parameters ein endgültiger Wert des Parameters für die aktuelle Iteration bestimmt wird.

4. Verfahren nach Anspruch 3,
   **dadurch gekennzeichnet,**
   **daß** die Filterung durch Bildung gleitender Mittelwerte erfolgt.

5. Verfahren nach einem der vorhergehenden Ansprüche,
   **dadurch gekennzeichnet,**
   **daß** als Lageparameter die Abstände des linken und rechten Modellfahrbahnrandes (26, 28) von dem, Sensor (12) verwendet werden.

6. Verfahren nach einem der vorhergehenden Ansprüche,

   **dadurch gekennzeichnet,**
   **daß** als Lageparameter eine Modellfahrbahnbreite und ein Abstand des Sensors (12) von mindestens einem der Modellfahrbahnränder (26, 28) oder der Modellfahrbahnmitte verwendet werden.

7. Verfahren nach einem der vorhergehenden Ansprüche,
   **dadurch gekennzeichnet,**
   **daß** der Verlauf der Modellfahrbahn (22) durch den durch entsprechende Verlaufsparameter bestimmten Verlauf eines linken und eines rechten Modellfahrbahnrandes (26, 28) dargestellt wird.

8. Verfahren nach einem der Ansprüche 1 bis 6,
   **dadurch gekennzeichnet,**
   **daß** der Modellfahrbahnverlauf durch eine Führungskurve (24) beschrieben wird, wobei die Lagen eines linken und eines rechten Modellfahrbahnrandes (26, 28) aus der Führungskurve (24) unter Verwendung der Lageparameter bestimmt werden.

9. Verfahren nach Anspruch 8,
   **dadurch gekennzeichnet,**
   **daß** die Führungskurve (24) in der Modellfahrbahnmitte liegt.

10. Verfahren nach einem der vorhergehenden Ansprüche,
    **dadurch gekennzeichnet,**
    **daß** der Verlauf der Modellfahrbahn (22) durch Polynommodelle und zugehörige Parametersätze dargestellt wird.

11. Verfahren nach einem der vorhergehenden Ansprüche,
    **dadurch gekennzeichnet,**
    **daß** die Größe des Nah- und/oder des Fernbereichs in Abhängigkeit von der Anzahl der in jedem dieser Bereiche gelegenen Objektpunkte (14) bestimmt wird.

12. Verfahren nach einem der vorhergehenden Ansprüche,
    **dadurch gekennzeichnet,**
    **daß** die Größe des Nah- und/oder des Fernbereichs in Abhängigkeit von mindestens einem der Verlaufsparameter bestimmt wird.

13. Verfahren nach einem der vorhergehenden Ansprüche,
    **dadurch gekennzeichnet,**
    **daß** der Modellfahrbahn (22) unter Verwendung von wenigstens einem der Modellfahrbahnparameter, insbesondere der Modellfahrbahnbreite, und/oder unter Verwendung der Position des Sensors (12) und einer digitalen Karte als Modellparameter ein Straßentyp zugeordnet ist, und
    **daß** die Größe des Nah- und des Fernbereichs in Abhängigkeit von dem Straßentyp bestimmt wird.

14. Verfahren nach einem der vorhergehenden Ansprüche,
    **dadurch gekennzeichnet,**
    **daß** die Lageparameter unter Verwendung der Lage der Objektpunkte (14) im Nahbereich relativ zu einem der geschätzten Modellfahrbahnränder, einer geschätzten Führungskurve oder einer aus einer dieser Kurven durch Translation hervorgehenden Kurve bestimmt werden, wobei die geschätzte Modellfahrbahn durch die in dem letzten Iterationsschritt bestimmten Parameterwerte bestimmt ist und bei einer ersten Durchführung der Bestimmung der geschätzte Verlauf aus anderen Angaben geschätzt wird.

15. Verfahren nach Anspruch 14,
    **dadurch gekennzeichnet,**
    **daß** eine Achse vorbestimmt wird, und
    **daß** zur Bestimmung der Lageparameter für jeden Objektpunkt (14) im Nahbereich dessen Abstand von einem der geschätzten Modellfahrbahnränder, der geschätzten Führungskurve oder einer aus einer dieser Kurven durch Translation hervorgehenden Kurve in einer Richtung parallel zu einer vorbestimmten Achse bestimmt wird.

**16.** Verfahren nach einem der Ansprüche 1 bis 15,
**dadurch gekennzeichnet,**
**daß** die Objektpunkte (14) im Nahbereich auf eine vorbestimmte Achse projiziert werden, und
**daß** die Lageparameter auf der Basis der Abstände dieser projizierten Objektpunkte von einem Referenzpunkt auf der Achse bestimmt werden.

**17.** Verfahren nach Anspruch 15 oder 16,
**dadurch gekennzeichnet,**
**daß** als Achse eine Senkrechte auf eine Längsachse des Sensors (12) verwendet wird.

**18.** Verfahren nach Anspruch 15 oder 16,
**dadurch gekennzeichnet,**
**daß** als Achse eine Senkrechte auf eine Längsachse des Sensors (12) korrigiert um einen Gierwinkel des Sensors (12) verwendet wird.

**19.** Verfahren nach Anspruch 2 und 15 oder 16,
**dadurch gekennzeichnet,**
**daß** als Achse eine Senkrechte auf eine Tangente an eine geschätzte Modellfahrbahn im Nahbereich verwendet wird, wobei die geschätzte Modellfahrbahn durch die in dem letzten Iterationsschritt bestimmten Parameterwerte bestimmt ist und bei einer ersten Durchführung der Bestimmung der geschätzte Verlauf aus anderen Angaben geschätzt wird.

**20.** Verfahren nach einem der Ansprüche 16 bis 19,
**dadurch gekennzeichnet,**
**daß** als Referenzpunkt die Lage des Sensors (12) oder der Schnittpunkt einer Führungskurve (24) oder der Modellfahrbahnmitte mit der Achse verwendet wird.

**21.** Verfahren nach einem der Ansprüche 14 bis 20,
**dadurch gekennzeichnet,**

**daß** vor der Bestimmung der Lageparameter durch Lage und Verlauf der Modellfahrbahnmitte in der vorhergehenden Iteration eine Linie definiert wird, und daß bei der Bestimmung der Werte der Lageparameter die Objektpunkte (14) im Nahbereich auf der einen Seite der Linie als die Fahrbahn auf dieser Seite begrenzende Objektpunkte (14) und die Objektpunkte (14) im Nahbereich auf der anderen Seite der Linie als die Fahrbahn auf dieser anderen Seite begrenzende Objektpunkte (14) verwendet werden.

**22.** Verfahren nach einem der vorhergehenden Ansprüche,
**dadurch gekennzeichnet,**
**daß** zur Bestimmung der Verlaufsparameter für den Verlauf der Modellfahrbahn (22) aus den Objektpunkten (14) im Fernbereich im dritten Schritt mindestens zwei Sätze von Werten für Verlaufsparameter vorgegeben werden, und daß als den Verlauf der Modellfahrbahnränder (26, 28) beschreibender Satz von Werten der Satz gewählt wird, der eine Modellfahrbahn (22) definiert, auf der die minimale Anzahl von Objektpunkten (14) im Fernbereich liegen.

**23.** Verfahren nach Anspruch 2 und Anspruch 22,
**dadurch gekennzeichnet,**
**daß** die Sätze von Werten für die Verlaufsparameter bei der aktuellen Iteration den Satz von Werten für die Verlaufsparameter bei einer vorhergehenden Iteration und mindestens einen weiteren durch Variation der Parameterwerte des Satzes bei der vorhergehenden Iteration erhaltenen Satz von Parameterwerten enthalten.

**24.** Verfahren nach Anspruch 23,
**dadurch gekennzeichnet,**
**daß** der Modellfahrbahn (22) unter Verwendung von wenigstens einem der Modellfahrbahnparameter, insbesondere der Modellfahrbahnbreite, und/oder unter Verwendung der Position des Sensors (12) und einer digitalen Karte als Modellparameter ein Straßentyp zugeordnet wird, und
**daß** die Anzahl der Sätze von variierten Parameterwerten und/oder die Variation in Abhängigkeit von dem Straßentyp bestimmt wird.

**25.** Verfahren nach einem der vorhergehenden Ansprüche,

**dadurch gekennzeichnet,**

**daß** Werte für einen separat zu bestimmenden Parameter der Modellfahrbahn (22), insbesondere den relativen Gierwinkel zwischen einer Längsachse des Sensors (12) und einer Tangente an die Modellfahrbahn (22) im Nahbereich, von einer externen Datenquelle eingelesen werden.

26. Verfahren nach einem der vorhergehenden Ansprüche,
**dadurch gekennzeichnet,**

**daß** vor dem ersten Schritt eine Objekterkennung, -klassifizierung und -verfolgung durchgeführt wird, und
**daß** Objektpunkte (14) von Objekten vorgegebener Objektklassen bei dem folgenden ersten, zweiten und dritten Schritt nicht berücksichtigt werden.

27. Computerprogramm mit Programmcode-Mitteln, um das Verfahren nach einem der Ansprüche 1 bis 26 durchzuführen, wenn das Programm auf einem Computer (18) ausgeführt wird.

28. Computerprogrammprodukt mit Programmcode-Mitteln, die auf einem computerlesbaren Datenträger gespeichert sind, um das Verfahren nach einem der Ansprüche 1 bis 26 durchzuführen, wenn das Computerprogrammprodukt auf einem Computer (18) ausgeführt wird.

29. Vorrichtung zur Bestimmung einer Modellfahrbahn mit
mindestens einem optoelektronischen Sensor (12), insbesondere Laserscanner, zur Bestimmung der Lage von Objekten und
einer mit dem optoelektronischen Sensor (12) über eine Datenverbindung (20) verbundenen Datenverarbeitungseinrichtung (18), die zur Durchführung des Verfahrens nach einem der Ansprüche 1 bis 26 ausgebildet ist.

**Claims**

1. A method for determining a model roadway (22) on the basis of coordinates of object points (14) of objects reproducing a roadway at least approximately, in particular objects bounding the roadway, and obtained by means of at least one optoelectronic sensor (12), in particular of a laser scanner, in which
in a first step, a near range and a far range are defined inside the range of view of the sensor (12), and
in a second step, values of positional parameters are determined from the object point coordinates in the near range and a model roadway width and the position of at least one model roadway edge (26, 28) relative to the sensor (12) are specified by them,
**characterized in that**
in a third step, values of course parameters for the course of the model roadway (22) are determined using the positional parameters from the object point coordinates in the far range.

2. A method in accordance with claim 1,
**characterized in that**
the method steps are used iteratively on temporally sequential sets of object point coordinates of corresponding, temporally sequential scanning passes of the sensor (12); and
**in that** at least one parameter value determined in an iteration is used in a later step or in a later iteration in the determination of at least one parameter value.

3. A method in accordance with claim 2,
**characterized in that**
a provisional value is determined for at least one parameter in each iteration; and
**in that** a final value of the parameter is determined for the actual iteration by filtering of the provisional parameter value determined in the actual iteration and of provisional values of the same parameter determined for preceding iterations.

4. A method in accordance with claim 3,
**characterized in that**
the filtering takes place by the formation of floating mean values.

**EP 1 421 568 B1**

5. A method in accordance with any one of the preceding claims,

   **characterized in that** the spacings of the left hand model roadway edge (26) and of the right hand model roadway edges (28) from the sensor (12) are used as the positional parameters.

6. A method in accordance with any one of the preceding claims,
   **characterized in that**

   a model roadway width and a spacing of the sensor (12) from at least one of the model roadway edges (26, 28) or from the model roadway center are used as the positional parameters.

7. A method in accordance with any one of the preceding claims,
   **characterized in that**
   the course of the model roadway (22) is represented by the course determined by corresponding course parameters of a left hand model roadway edge (26) and of a right hand model roadway edge (28).

8. A method in accordance with any one of the claims 1 to 6,
   **characterized in that**
   the model roadway course is described by a guide curve (24), with the positions of a left hand model roadway edge (26) and of a right hand model roadway edge (28) being determined from the guide curve (24) using the positional parameters.

9. A method in accordance with claim 8,
   **characterized in that**
   the guide curve (24) lies in the model roadway center.

10. A method in accordance with any one of the preceding claims,
    **characterized in that**
    the course of the model roadway (22) is represented by polynomial models and associated parameter sets.

11. A method in accordance with any one of the preceding claims,
    **characterized in that**
    the size of the near range and/or of the far range is determined in dependence on the number of the object points (14) disposed in each of these ranges.

12. A method in accordance with any one of the preceding claims,
    **characterized in that**
    the size of the near range and/or of the far range is determined in dependence on at least one of the course parameters.

13. A method in accordance with any one of the preceding claims,
    **characterized in that**
    a road type is associated as a model parameter with the model roadway (22) using at least one of the model roadway parameters, in particular the model roadway width, and/or using the position of the sensor (12) and a digital map; and **in that** the size of the near range and of the far range is determined in dependence on the road type.

14. A method in accordance with any one of the preceding claims,
    **characterized in that**
    the positional parameters are determined using the position of the object points (14) in the near range relative to one of the estimated model roadway edges, the position of an estimated guide curve or the position of a curve arising from one of these curves by translation, with the estimated model roadway being determined by the parameter values determined in the last iteration step and the estimated course being estimated from other data on a first carrying out of the determination.

15. A method in accordance with claim 14,
    **characterized in that**
    an axis is pre-determined; and
    **in that**, for the determination of the positional parameters for each object point (14) in the near range, its spacing from one of the estimated model roadway edges, from the estimated guide curve or from a curve arising from one of these curves by translation is determined in a direction parallel to a pre-determined axis.

**16.** A method in accordance with one of the claims 1 to 15,
**characterized in that**

the object points (14) are projected onto a pre-determined axis in the near range; and **in that** the positional parameters are determined on the basis of the spacings of these projected object points from a reference point on the axis.

**17.** A method in accordance with claim 15 or claim 16,
**characterized in that**
a perpendicular to a longitudinal axis of the sensor (12) is used as the axis.

**18.** A method in accordance with claim 15 or claim 16,
**characterized in that**
a perpendicular to a longitudinal axis of the sensor (12), corrected by a yaw angle of the sensor (12), is used as the axis.

**19.** A method in accordance with claim 2 and claim 15 or claim 16,

**characterized in that**
a perpendicular to a tangent to an estimated model roadway is used as the axis in the near range, with the estimated model roadway being determined by the parameter values determined in the last iteration step and the estimated course being estimated from other data in a first carrying out of the determination.

**20.** A method in accordance with one of the claims 16 to 19,
**characterized in that**
the position of the sensor (12) or of the point of intersection of a guide curve (24) or of the model roadway center with the axis is used as the reference point.

**21.** A method in accordance with one of the claims 14 to 20,
**characterized in that**
a line is defined by the position and by the course of the model roadway center in the preceding iteration prior to the determination of the positional parameters; and
**in that**, on determining the values of the positional parameters, the object points (14) in the near range on the one side of the line are used as object points (14) bounding the roadway on this side and the object points (14) in the near range on the other side of the line are used as object points (14) bounding the roadway on this other side.

**22.** A method in accordance with any one of the preceding claims,

**characterized in that**
for the determination of the course parameters for the course of the model roadway (22) from the object points (14) in the far range, at least two sets of values are pre-set for course parameters in the third step; and **in that** that set is selected as the set of values describing the course of the model roadway edges (26, 28) which defines a model roadway (22) on which the minimum number of object points (14) lie in the far range.

**23.** A method in accordance with claim 2 and claim 22,
**characterized in that**
the sets of values for the course parameters contain in the actual iteration the set of values for the course parameters in a preceding iteration and at least one further set of parameter values which is obtained by variation of the parameter values of the set in the preceding iteration.

**24.** A method in accordance with claim 23,
**characterized in that**
a road type is associated with the model roadway (22) as a model parameter using at least one of the model roadway parameters, in particular the model roadway width, and/or using the position of the sensor (12) and a digital map; and **in that** the number of sets of varied parameter values and/or the variation is determined in dependence on the road type.

**25.** A method in accordance with any one of the preceding claims, **characterized in that** values for a parameter of the model roadway (22) to be determined separately, in particular for the relative yaw angle between a longitudinal axis of the sensor (12) and a tangent to the model roadway (22) in the near range, are read in from an external data source.

**26.** A method in accordance with any one of the preceding claims, **characterized in that** an object recognition, classification and tracking is carried out prior to the first step; and **in that** object points (14) of objects of pre-determined object classes are not taken into account in the following first, second and third steps.

**27.** A computer program with program code means to carry out the method in accordance with any one of the claims 1 to 26, when the program is carried out on a computer (18).

**28.** A computer program product with program code means which are stored on a computer legible data carrier to carry out the method in accordance with any one of the claims 1 to 26, when the computer program product is carried out on a computer (18).

**29.** An apparatus for determining a model roadway comprising at least one optoelectronic sensor (12), in particular a laser scanner, for the determination of the position of objects; and a data processing device (18) which is connected to the optoelectronic sensor (12) via a data connection (20) and which is made to carry out the method in accordance with any one of the claims 1 to 26.

**Revendications**

**1.** Procédé pour déterminer une voie de circulation modélisée (22) en se basant sur des coordonnées de points-objets (14) pour des objets qui restituent au moins approximativement une voie de circulation et en particulier qui délimitent la voie de circulation, ces coordonnées ayant été obtenues au moyen d'au moins un capteur optoélectronique (12), en particulier un scanneur à laser, dans lequel dans une première étape, on définit à l'intérieur de la zone de vision du capteur (12) une zone proche et une zone lointaine, et dans une seconde étape, on détermine à partir des coordonnées de points-objets on détermine à partir des coordonnées de points-objets des coordonnées de points-objets dans la zone proche des valeurs de paramètres de situation au moyen desquelles on détermine une largeur de la voie de circulation modélisée et la position d'au moins un bord (26, 28) de la voie de circulation modélisée par rapport au capteur (12), **caractérisé en ce que** dans une troisième étape, on détermine à partir des coordonnées des points-objets dans la zone lointaine des valeurs de paramètres de tracé pour le tracé de la voie de circulation modélisée (22) en utilisant les paramètres de situation.

**2.** Procédé selon la revendication 1, **caractérisé en ce que** les étapes du procédé sont appliquées de manière itérative à des groupes de coordonnées de points-objets successifs dans le temps et provenant de passes de palpage correspondantes du capteur (12) successives dans le temps, et **en ce qu'**au moins une valeur de paramètre déterminée lors d'une itération est utilisée dans une étape ultérieure ou dans une itération ultérieure lors de la détermination d'au moins une valeur de paramètre.

**3.** Procédé selon la revendication 2, **caractérisé en ce que** lors de chaque itération on détermine une valeur provisoire pour au moins un paramètre, et **en ce que** par filtrage de la valeur de paramètre provisoire déterminée lors de l'itération actuelle et des valeurs provisoires du même paramètre, déterminées lors d'itérations précédentes, on détermine une valeur définitive du paramètre pour l'itération actuelle.

**4.** Procédé selon la revendication 3, **caractérisé en ce que** le filtrage a lieu par formation de valeurs moyennes glissantes.

**5.** Procédé selon l'une des revendications précédentes,
**caractérisé en ce que** l'on utilise à titre de paramètres de situation les distances du bord droit et du bord gauche de la voie de circulation modélisée (26, 28) depuis le capteur (12).

**6.** Procédé selon l'une des revendications précédentes,
**caractérisé en ce que** l'on utilise à titre de paramètres de situation une largeur de la voie de circulation modélisée et une distance du capteur (12) depuis l'un au moins des bords de la voie de circulation modélisée (26, 28) ou depuis le milieu de la voie de circulation modélisée.

**7.** Procédé selon l'une des revendications précédentes,
**caractérisé en ce que** le tracé de la voie de circulation modélisée (22)
est représenté par le tracé, déterminé par des valeurs de tracé correspondantes, d'un bord gauche et d'un bord droit de la voie de circulation modélisée (26, 28).

**8.** Procédé selon l'une des revendications 1 à 6,
**caractérisé en ce que** le tracé de la voie de circulation modélisée est décrit par une courbe-guide (24), et dans lequel on détermine les situations d'un bord gauche et d'un bord droit de la voie de circulation modélisée (26, 28) depuis la courbe-guide (24) en utilisant les paramètres de situation.

**9.** Procédé selon la revendication 8,
**caractérisé en ce que** la courbe-guide (24) est située au milieu de la voie de circulation modélisée.

**10.** Procédé selon l'une des revendications précédentes,
**caractérisé en ce que** le tracé de la voie de circulation modélisée (22) est représenté par des modèles à polynômes et des groupes de paramètres associés.

**11.** Procédé selon l'une des revendications précédentes,
**caractérisé en ce que** la taille de la zone proche et/ou de la zone lointaine est déterminée en fonction du nombre des points-objets (14) situés dans chacune de ces zones.

**12.** Procédé selon l'une des revendications précédentes,
**caractérisé en ce que** la taille de la zone proche et/ou de la zone lointaine est déterminée en fonction de l'un au moins des paramètres de tracé.

**13.** Procédé selon l'une des revendications précédentes,
**caractérisé en ce qu'**un type de route est associé à la voie de circulation modélisée (22) en utilisant l'un au moins des paramètres de la voie de circulation modélisée, en particulier la largeur de la voie de circulation modélisée, et/ou en utilisant la position du capteur (12) et une carte numérique à titre de paramètres de modèle, et
**en ce que** la taille de la zone proche et de la zone lointaine est déterminée en fonction du type de route.

**14.** Procédé selon l'une des revendications précédentes,
**caractérisé en ce que** les paramètres de situation sont déterminés en utilisant la situation des points-objets (14) dans la zone proche par rapport à l'un des bords estimés de la voie de circulation modélisée, d'une courbe-guide estimée, ou d'une courbe issue de ces courbes par translation, et la voie de circulation modélisée estimée est déterminée par les valeurs de paramètres déterminées lors de la dernière étape d'itération, et est estimée lors d'une première exécution de la détermination du tracé estimé à partir d'autres indications.

**15.** Procédé selon la revendication 14,
**caractérisé en ce que**
un axe est prédéterminé, et
**en ce que** pour la détermination des paramètres de situation pour chaque point-objet (14) dans la zone proche, on détermine sa distance depuis l'un des bords estimés de la voie de circulation modélisée, ou depuis la courbe-guide estimée, ou encore depuis une courbe issue de ces courbes par translation, dans une direction parallèle à un axe prédéterminé.

**16.** Procédé selon l'une des revendications 1 à 15,
**caractérisé en ce que** les points-objets (14) dans la zone proche sont projetés sur un axe prédéterminé, et
**en ce que** les paramètres de situation sont déterminés en se basant sur les distances de ces points-objets projetés depuis un point de référence sur l'axe.

17. Procédé selon la revendication 15 ou 16,
    **caractérisé en ce que** l'on utilise comme axe une perpendiculaire sur un axe longitudinal du capteur (12).

18. Procédé selon la revendication 15 ou 16,
    **caractérisé en ce que** l'on utilise comme axe une perpendiculaire sur un axe longitudinal du capteur (12), corrigé d'un angle de lacet du capteur (12).

19. Procédé selon la revendication 2 et 15 ou 16,
    **caractérisé en ce que** l'on utilise comme axe une perpendiculaire sur une tangente à une voie de circulation modélisée estimée dans la zone proche, ladite voie de circulation estimée étant déterminée par des valeurs de paramètres déterminées lors de la dernière étape d'itération, et lors d'une première exécution de la détermination, le tracé estimé est estimé à partir d'autres indications.

20. Procédé selon l'une des revendications 16 à 19,
    **caractérisé en ce que** l'on utilise à titre de point de référence la situation du capteur (12) ou bien le point d'intersection d'une courbe-guide (24) ou du milieu de la voie de circulation modélisée avec l'axe.

21. Procédé selon l'une des revendications 14 à 20,
    **caractérisé en ce que**
    avant la détermination des paramètres de situation, on définit une ligne par la situation et le tracé du milieu de la voie de circulation modélisée lors de l'itération précédente, et
    **en ce que** lors de la détermination des valeurs des paramètres de situation, on utilise les points-objets (14) dans la zone proche sur l'un des côtés de la ligne comme étant les points-objets (14) qui délimitent la voie de circulation sur ce côté, et on utilise les points-objets (14)
    dans la zone proche de l'autre côté de la ligne comme étant les points-objets qui délimitent la voie de circulation sur cet autre côté.

22. Procédé selon l'une des revendications précédentes,
    **caractérisé en ce que**, pour la détermination des paramètres de tracé pour le tracé de la voie de circulation modélisée (22) à partir des points-objets (14) dans la zone lointaine lors de la troisième étape, on impose au moins deux groupes de valeurs pour des paramètres de tracé, et **en ce que** l'on choisit comme groupe de valeurs qui décrit le tracé des bords de la voie de circulation modélisée (26, 28) celui des groupes qui définit une voie de circulation modélisée (22) sur laquelle le nombre de points-objets (14) situés dans la zone lointaine est minimum.

23. Procédé selon la revendication 2 et la revendication 22,
    **caractérisé en ce que** les groupes de valeurs pour les paramètres de tracé lors de l'itération actuelle contiennent le groupe de valeurs pour les paramètres de tracé lors d'une itération précédente, et au moins un autre jeu de valeurs de paramètres obtenues par variation des valeurs de paramètres du groupe lors de l'itération précédente.

24. Procédé selon la revendication 23,
    **caractérisé en ce qu'**un type de route est associé à la voie de circulation modélisée (22) en utilisant l'un au moins des paramètres de la voie de circulation modélisée, en particulier la largeur de la voie de circulation modélisée, et/ou en utilisant la position du capteur (12) et une carte numérique, à titre de paramètres de modèle, et
    **en ce que** le nombre des groupes de valeurs de paramètres variés et/ou la variation est déterminé en fonction du type de route.

25. Procédé selon l'une des revendications précédentes,
    **caractérisé en ce que** des valeurs pour des paramètres, à déterminer séparément, de la voie de circulation modélisée (22), en particulier l'angle de lacet relatif entre un axe longitudinal du capteur (12) et une tangente à la voie de circulation modélisée (22) dans la zone proche, sont lues depuis une source de données externe.

26. Procédé selon l'une des revendications précédentes,
    **caractérisé en ce qu'**avant la première étape, on effectue une reconnaissance, une classification et une poursuite d'objets, et **en ce que** les points-objets (14) d'objets appartenant à des classes d'objets prédéterminées ne sont pas pris en compte lors de la première, de la secondée de la troisième étape successives.

27. Programme d'ordinateur avec des moyens formant code de programme, pour mettre en oeuvre le procédé selon la revendication 1 à 26, quand le programme est exécuté sur un ordinateur (18).

28. Produit de programmes d'ordinateurs comprenant des moyens formant code de programme qui sont mémorisés sur un support de données lisible à l'ordinateur, pour mettre en oeuvre le procédé selon l'une des revendications 1 à 26 lorsque le produit de programme d'ordinateur est exécuté sur un ordinateur (18).

29. Dispositif pour déterminer une voie de circulation modélisée comprenant au moins un capteur optoélectronique (12), en particulier un scanneur à laser, pour la détermination de la situation d'objets, et comprenant un système de traitement de données (18), relié au capteur électronique (12) via une liaison de transmission de données (20), réalisé pour mettre en oeuvre le procédé selon l'une des revendications 1 à 26.

EP 1 421 568 B1

# Fig. 1

# Fig. 2

21

## Fig. 3

Lesen von Objektpunktkoordinaten und Objektdaten ~100

102~ Entfernen von unerwünschten Objekten

104~ Bestimmung Nah-/Fernbereich

106~ Sortieren der Objektpunkte im Nahbereich

108~ Bestimmung nächster Objektpunkte zu Straßenmitte

110~ Bestimmung Modellfahrbahnbreite und Lage d. Modellfahrbahnmitte

Bestimmung d. Straßentyps ~112

Bildung gleitender Mittelwerte f. Modellfahrbahnbreite ~114

Bildung gleitender Mittelwerte f. Modellfahrbahnmitte ~116

Bestimmung Modellfahrbahnverlauf ~118

Bildung gleitender Mittelwerte f. Verlauf ~120

Ausgabe Modellparameter ~122